Europäisches Patentamt

European Patent Office

Office européen des brevets

(19)

(11) **EP 1 431 730 B1**

(12) **FASCICULE DE BREVET EUROPEEN**

(45) Date de publication et mention
de la délivrance du brevet:
**23.03.2005 Bulletin 2005/12**

(51) Int Cl.7: **G01J 1/04**, G02B 5/12,
G02B 5/20, G01S 7/497

(21) Numéro de dépôt: **03293202.2**

(22) Date de dépôt: **18.12.2003**

(54) **Dispositif à surface équivalente laser parfaitement connue**

Vorrichtung mit exakt bekannter entsprechender Laserfläche

Device having a perfectly known laser equivalent surface

(84) Etats contractants désignés:
**AT BE BG CH CY CZ DE DK EE ES FI FR GB GR
HU IE IT LI LU MC NL PT RO SE SI SK TR**

(30) Priorité: **20.12.2002 FR 0216275**

(43) Date de publication de la demande:
**23.06.2004 Bulletin 2004/26**

(73) Titulaire: **Etat Francais représenté par le Délégue
Général pour l'Armement
94114 Arcueil Cedex (FR)**

(72) Inventeurs:
• **Paradis, Jean-Luc
94500 Champigny-sur-Marne (FR)**
• **Chablat, Joel
91140 Villebon-sur-Yvette (FR)**
• **Vesque, Jacques
92260 Fontenay-aux-Roses (FR)**
• **Garcia, José
91160 Champlan (FR)**

(56) Documents cités:
**EP-A- 0 896 230          WO-A-02/33438
WO-A-97/25635          FR-A- 1 523 023
FR-A- 2 753 277          FR-A- 2 791 473**

## Description

L'invention concerne notamment le domaine des mesures des performances des systèmes de détection et a plus particulièrement pour objet un perfectionnement aux dispositifs à surface équivalente laser parfaitement connue et éventuellement réglable.

De nombreux instruments d'observation possèdent dans leur plan image, aussi appelé foyer image dans la suite, une surface réfléchissante ou diffusante. C'est, par exemple, la lame porte-réticule dans un viseur ou dans des jumelles, la surface détectrice dans un appareil photographique ou une caméra, qu'ils soient à film ou numériques. C'est aussi la rétine de l'oeil. Une telle surface absorbe ou transmet une partie de l'énergie pour former le signal utile, par exemple celui d'une image photographique, d'un signal vidéo ou d'une image rétinienne et réfléchit de façon spéculaire ou de façon diffuse une autre partie de l'énergie incidente. Cette énergie est en partie recueillie par l'optique de formation de l'image qui, d'après le principe du retour inverse de la lumière, la renvoie de façon très directive dans le plan de la source où elle se trouve concentrée.

Si un autre instrument d'observation est situé à proximité immédiate de l'objet lumineux, aussi appelé la source, ou lui est virtuellement superposé par un moyen optique, il reçoit ce flux concentré en provenance du premier système d'observation.

Si l'objet est une source lumineuse intense (un laser en particulier), le faisceau concentré en retour peut créer sur ce second système d'observation une image du premier beaucoup plus lumineuse que son environnement.

C'est ce phénomène qui crée sur les photographies prises au flash le phénomène des yeux rouges si le flash est trop proche de l'objectif de l'appareil photographique. La pupille de l'oeil, au lieu de paraître noire, est éclairée en rouge par la diffusion importante de cette couleur par la rétine de l'oeil humain.

C'est ce même phénomène qui rend les yeux de chats lumineux la nuit dans les phares de voiture. C'est pourquoi cette rétroréflexion est parfois appelée « effet oeil de chat ».

Si l'objet observé, en l'occurrence le deuxième système d'observation, éclaire l'instrument qui l'observe, en l'occurrence le premier système que l'on appelle « optique pointée », au moyen d'un laser, celui-ci renvoie dans la direction précise du laser émetteur une énergie lumineuse importante. On qualifie cette énergie en évaluant, dans des conditions expérimentales bien définies, quelle surface devrait avoir un objet imaginaire qui, soumis au même éclairement, n'absorbant rien et diffusant uniformément la lumière dans tout l'espace renverrait la même intensité lumineuse que l'optique pointée dans la direction précise du laser. On dit alors que l'optique pointée a une surface équivalente laser (SEL) égale à cette surface. Ainsi il n'est pas impossible qu'une optique de quelques centimètres carrés ait une surface équivalente laser de plusieurs centaines de mètres carrés. Cela veut simplement dire qu'elle renvoie vers l'observateur autant d'énergie que l'objet imaginaire ayant une telle surface.

La définition de la surface équivalente laser est plus générale mais on ne s'intéresse ici qu'à la Surface Equivalente Laser (SEL) mono statique. Dans cette dernière l'émetteur laser et le détecteur qui reçoit la lumière réfléchie sont suffisamment proche pour être considérés comme confondus lorsqu'ils sont vus depuis le premier système d'observation.

On s'intéresse à l'ensemble du domaine optique et le terme « lumière » employé dans ce texte peut désigner n'importe quel domaine dans l'ensemble du spectre des rayonnements électromagnétiques.

On s'intéresse principalement aux instruments d'observation à grande distance et, sans pour cela restreindre le champ d'application de l'invention, on confondra, dans la suite, le plan image et le plan focal du premier système d'observation.

La valeur de la surface équivalente laser est un paramètre important pour les systèmes d'observation car elle détermine leur discrétion vis-à-vis d'un système actif de détection utilisant cette propriété. Dire que le système de détection est actif, signifie que le système contient une source de lumière.

Pour qualifier les instruments vis-à-vis de cette menace de détection, il faut pouvoir mesurer la valeur de leur surface équivalente laser. Cela peut se faire au moyen d'une expérience calibrée sur un ou plusieurs instruments dont la valeur de la surface équivalente laser est connue (étalonnage de l'installation de mesure de surface équivalente laser).

Pour mesurer les performances d'un système de détection utilisant cette propriété, il faut disposer d'instruments représentant plusieurs valeurs de surface équivalente laser ou d'un instrument dont la valeur de la surface équivalente laser est réglable de façon déterministe.

Dans un instrument d'observation normal, la surface équivalente laser dépend de nombreux paramètres tels que les aberrations géométriques ou le coefficient de réflexion du plan image à la longueur d'onde considérée (éventuellement affecté par des interférences) qui sont traités par le concepteur du système dans l'optique de la qualité image, mais pas dans celle de la discrétion. Ainsi différents instruments présentant une qualité d'image répondant aux mêmes normes peuvent avoir des surfaces équivalentes laser très différentes. De plus, un seul instrument peut avoir, en fonction de la longueur d'onde ou de l'angle de champ, une valeur de surface équivalente laser qui varie de façon inattendue.

On ne peut donc pas utiliser de tels instruments comme référence de surface équivalente laser pour répondre aux besoins exprimés précédemment. On ne peut pas non plus utiliser une simple surface diffusante qui serait beaucoup trop grande. On pourrait utiliser de simples miroirs sphériques, mais il faudrait à chaque longueur d'onde, un miroir de rayon de courbure différent ou de coefficient de réflexion différent pour chaque valeur de surface équivalente laser.

On connaît toutefois, l'utilisation de dispositifs de référence utilisés pour les mesures de surface équivalente laser.

Ainsi, la demande de brevet WO02/33438 décrit un dispositif à surface équivalente laser connue et continûment réglable et comportant un objectif, un miroir disposé de façon à former au moins un axe optique du dispositif et des moyens de réglage de la distance séparant l'objectif du miroir. Dans une variante de réalisation, il comporte un filtre atténuateur apte à faire varier ou à ajuster la surface équivalente laser du dispositif.

D'autres dispositifs pour lesquels l'intensité lumineuse « rétroréfléchie », c'est-à-dire réfléchie dans l'axe d'illumination, est principalement liée, comme dans le brevet cité aux propriétés géométriques du système optique ou, au contraire, à sa diffraction sont également utilisés. Dans la première catégorie on trouve des calottes sphériques réfléchissantes et dans la seconde des systèmes limités par la diffraction comme des trièdres trirectangles réfléchissants, formant ce qu'on appelle généralement un coin de cube ou des systèmes constitués d'un objectif et d'une surface réfléchissante ou diffusante placée en son foyer.

Dans un dispositif selon la demande de brevet WO02/33438 le miroir doit être placé à une distance x du foyer de l'objectif suffisante pour que le cercle du défaut de mise au point soit grand devant la tache image. Cette précaution est nécessaire pour éviter les problèmes des instruments théoriquement focalisés ou faiblement défocalisés qui peuvent, en fonction de réglages en position sur l'axe (x) et dans le champ de l'instrument très critiques, posséder une SEL variant d'une valeur nulle à une valeur très élevée de façon apparemment aléatoire.

Cette variation de la SEL apparaissant en fonction du réglage de l'instrument, pour un instrument théoriquement situé à une distance infinie, qui est une condition de définition de la SEL, apparaît également en fonction de la distance d'utilisation dudit instrument. Ainsi, même un coin de cube parfaitement réalisé et qui ne possède aucun réglage présentera une SEL dont la valeur s'annule à certaines distances.

Ces modulations de la valeur de la SEL, difficiles à maîtriser, s'étendent plus ou moins en fonction de la cohérence de la lumière incidente, des aberrations géométriques du système, de ses défauts de réalisation et de la distance d'utilisation, ce qui limite le domaine d'utilisation de tels systèmes.

L'objet de la présente proposition est de contourner cette limitation, augmentant ainsi le domaine d'application et la confiance que l'on peut apporter à ces systèmes dans les domaines d'application, voire de passer continûment d'un système utilisant des propriétés géométriques à un système limité par la diffraction.

La solution apportée est, selon un premier mode de réalisation, un dispositif à surface équivalente laser parfaitement connue, caractérisé en ce qu'il comporte un atténuateur radial apte à modifier l'ouverture du dispositif et possédant une loi de transmission radiale en courbe en cloche.

Selon une caractéristique particulière, cet atténuateur radial comporte l'une au moins des caractéristiques suivantes :

- il est disposé dans le plan de la pupille,

- sa loi de transmission comporte une symétrie de révolution.

- sa loi de transmission est décroissante de façon monotone depuis le centre de la pupille jusqu'à son bord,

- sur l'ensemble de la pupille, la pente de la surface représentant la loi de transmission ne comporte pas de discontinuité,

- sa loi de transmission est de type sinusoïdale, par exemple en $\sin^2$ ou en $\cos^2$, en $\cos^4$....

Selon une caractéristique particulière, il comporte un objectif et un miroir disposé de façon à former au moins un axe optique OZ du dispositif et à une distance x de l'image foyer F', x étant différente de 0.

L'axe optique du dispositif est défini comme l'axe passant par le centre optique de l'objectif et qui est perpendiculaire au miroir. Dans le cas d'un miroir sphérique ayant pour centre le centre optique de l'objectif, il existe une infinité d'axes optiques du dispositif passant par ie centre optique de l'objectif et perpendiculaire audit miroir. Dans de nombreux cas, l'axe optique du dispositif est confondu avec l'axe optique de l'objectif qui passe par le centre de courbure de l'objectif et par le foyer image. C'est notamment le cas lorsqu'un miroir plan est disposé perpendiculairement à l'axe optique de l'objectif.

Selon une autre caractéristique, il comporte des moyens de réglage de la distance séparant l'objectif du miroir.

Le déplacement relatif de l'objectif et du miroir, réalisé par lesdits moyens de réglage est effectué, se fait préférentiellement en conservant la perpendicularité entre ledit axe optique du dispositif et le miroir.

Selon une caractéristique particulière, l'objectif est fixe et il comporte des moyens de réglage de la position du miroir qui sont aptes à régler la distance séparant l'objectif du miroir.

Selon une caractéristique particulière, le miroir est fixe et il comporte des moyens de réglage de la position de l'objectif qui sont aptes à régler la distance séparant l'objectif du miroir.

Les moyens de réglage sont de type connus et peuvent par exemple comporter un mouvement hélicoïdal qui peut être entraîné manuellement ou motorisé par exemple avec un moteur électrique de type pas à pas.

Des moyens de commande peuvent être associés aux moyens de réglage, commande dont la consigne peut être exprimée en Surface équivalente laser.

Selon une autre caractéristique préférentielle, ledit miroir est un miroir plan et est préférentiellement disposé perpendiculairement audit axe optique du dispositif afin que la plus grande partie de la lumière incidente soit renvoyée en direction de l'objectif.

Selon une autre caractéristique, le dispositif selon l'invention consiste soit en une calotte sphérique réfléchissante dont la calotte sphérique peut ou non comporter un traitement réfléchissant radial dont le coefficient de réflexion suit une courbe en cloche, soit en un trièdre trirectangle réfléchissant, soit comporter un objectif et une surface diffusante placée en son foyer ou à faible distance de celui-ci, soit comporter un objectif et une surface réfléchissante placée en son foyer ou à faible distance de celui-ci

Par faible distance, il faut entendre une distance inférieure à la distance de mise au point, définie par la distance à laquelle le cercle du défaut de mise au point à un diamètre égal à celui de la tâche image.

Selon une autre caractéristique, un dispositif selon l'invention comporte des moyens d'alignement aptes à l'aligner avec un second dispositif, tel un dispositif extérieur de détection active, de façon à rendre ce second dispositif colinéaire à l'axe optique, de tels moyens d'alignement pouvant comporter des moyens de visée par exemple constitués par une lunette de visée ou un guidon et un oeilleton. De plus, les moyens de visée peuvent être disposés latéralement par rapport à l'axe optique et des moyens d'occultation des moyens de visée peuvent être prévus afin que ces derniers ne modifient pas la surface équivalente laser du dispositif selon l'invention.

De surcroît, un filtre atténuateur peut être disposé sur l'objectif et, préférentiellement, aucune de ses faces n'est perpendiculaire audit axe optique.

L'invention concerne aussi un procédé pour régler la surface équivalente laser d'un dispositif selon l'invention à une valeur prédéterminée SEL, caractérisé en ce qu'il consiste à déplacer ledit miroir selon l'axe optique de l'objectif et jusqu'à une distance x de l'image foyer, la valeur x étant déterminée par la formule suivante :

$$x = (\pi.R.To^2.f^4/SEL)^{1/2}$$

où « R » est le facteur de réflexion du miroir, « To » le facteur de transmission de l'objectif et « f » sa focale.

D'autres avantages et caractéristiques de la présente invention apparaîtront dans la description de différentes variantes de réalisation de l'invention, en regard des figures annexées parmi lesquelles :

- La figure 1 schématise les moyens généraux constitutifs d'une variante de réalisation de l'invention.

- La figure 2 présente une seconde variante de réalisation de l'invention,

- La figure 3a montre la position des moyens de réglage de la position du miroir pour une forte valeur de la surface équivalente laser : le miroir étant proche du foyer de l'objectif.

- La figure 3b montre la position des moyens de réglage de la position du miroir pour une plus faible valeur de la surface équivalente laser : le miroir a été éloigné du foyer.

- La figure 4 présente des lois de transmission gaussienne d'un filtre selon un premier exemple de réalisation de l'invention,

- Les figures 5 et 6 présentent différentes lois de transmission d'un filtre selon une seconde variante de réalisation de l'invention.

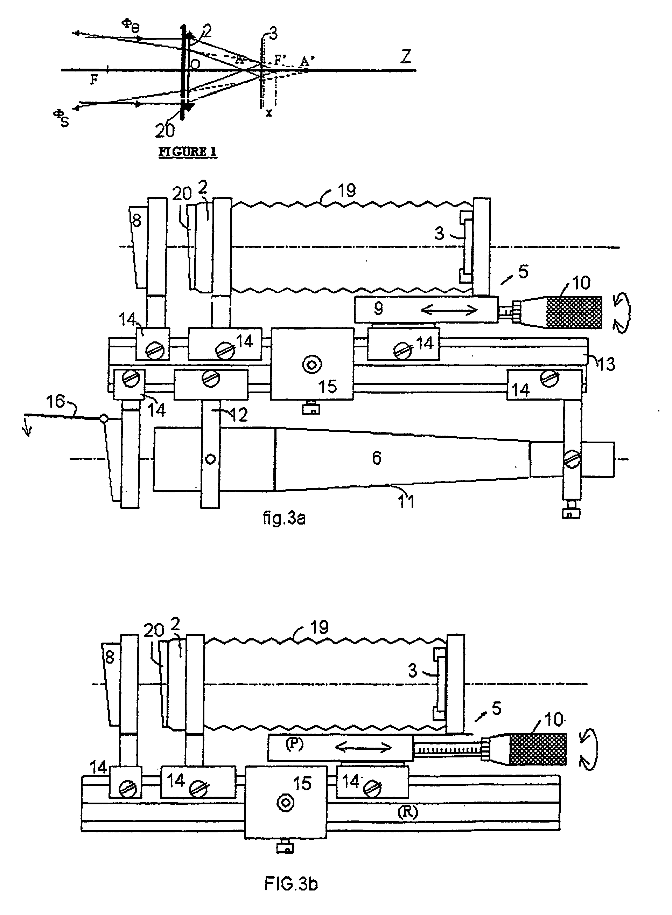

La figure 1 schématise les moyens généraux constitutifs d'un dispositif à surface équivalente laser parfaitement connue selon une variante de réalisation de l'invention dans laquelle ce dispositif comporte un objectif fixe 2, un filtre atténuateur ayant une loi de transmission en cloche 20, un miroir 3, plan de préférence, perpendiculaire à l'axe optique OZ et dont la distance « x » au foyer détermine avec les autres paramètres du montage, tels que le facteur de réflexion R du miroir, le facteur de transmission To de l'objectif et sa focale f la valeur de la surface équivalente laser et dont le déplacement dans la direction de l'axe optique OZ permet de régler continûment cette valeur.

Lorsque ladite distance x est suffisante pour que le cercle du défaut de mise au point soit grand devant la tache image liée à la diffraction et aux aberrations qui correspond à la meilleure mise au point, la valeur de la surface équivalente laser peut être déterminée sans tenir compte de la dimension de cette tache.

Dans ces conditions la valeur de la Surface équivalente Laser d'un tel montage a pour valeur

$$SEL = \pi\ R\ To^2\ f^4\ /\ x^2,$$

où « R » est le facteur de réflexion du miroir, « To » le facteur de transmission de l'objectif et « f » sa focale.

Dans les exemples numériques suivants, on a pris R = T = 1.

Ainsi avec un objectif de 200 mm de focate, on peut obtenir une surface équivaiente laser de 100 m² avec une précision de 1 % en plaçant le miroir à 7,09 mm ± 0,05 mm.

Optiquement ce montage est équivalent à un miroir sphérique de 5,64 m de rayon de courbure. Mais, pour réaliser, avec la même précision, la valeur de surface équivalente laser de 100 m$^2$ avec un simple miroir de coefficient de réflexion R = 1, il faudrait lui donner ce rayon de courbure de 5,64 m à ± 0,03 m. Soit, sur un diamètre utile de la calotte de 25 mm, un écart à la sphère théorique de 0,07 μm, soit ¼ de frange circulaire centrée par rapport à un calibre sphérique parfait de 5,64 m de rayon de courbure, ce qui est difficilement réalisable. De plus, il faudrait adapter le rayon de courbure en fonction du coefficient de réflexion ; ce qui limiterait le domaine spectral d'utilisation.

Le montage proposé est particulièrement tolérant vis-à-vis de la fabrication et des réglages. En effet :

- Les réglages nécessaires peuvent facilement être obtenus avec la précision voulue par des moyens mécaniques de translation disponibles dans le commerce ou de conception classique dans les instruments d'optique, tels que les mouvements hélicoïdaux utilisés pour la mise au point des appareils photographiques.

- Le diamètre de pupille n'a pas besoin d'être très grand mais doit être suffisant pour que sa diffraction n'intervienne pas.

    Il suffit que son lobe de diffraction soit nettement moins ouvert que le lobe de divergence géométrique du dispositif.

    A titre d'exemple : dans le premier cas ( surface équivalente laser de 100 m$^2$), si on prend un diamètre de $2*r_0$=25 mm, on obtient un rayon angulaire, pour le lobe géométrique, de 4,4 mrad et, pour le lobe de diffraction, de 0,05 mrad à la longueur d'onde de 1 μm. (Les résultats sont les mêmes si on utilise le miroir de 5,64 m de rayon de courbure). On peut tenir compte de la loi de transmission en cloche pour affiner le résultat. Toutefois, le calcul fait, sans en tenir compte donne un très bon ordre de grandeur du résultat.

- Le filtre en cloche qui atténue les bords du lobe géométrique réduit la tolérance angulaire du dispositif. Par exemple, pour une tolérance sur la valeur de la SEL de 10%, et pour un filtre en cloche en cos$^2$B , où B=$\pi r/2r_0$, traversé deux fois, la tolérance est réduite dans le rapport $r/r_0$ pour lequel COS$^4$B vaut 0,9 soit $r/r_0$=0,15 ce qui donne encore une tolérance de 9mrad.

Pour le miroir courbe, affecté une seule fois par la loi en cos$^2$B, la tolérance est réduite dans le rapport $r/r_0$ pour lequel cos$^2$B=0,9 soit r/r0=0,21 ce qui donne une tolérance de 0,45mrad.

La tolérance angulaire du dispositif est liée au nombre d'ouverture d'objectif, donc à sa focale (en raison inverse de cette dernière). Elle est, dans notre exemple de 62,5 mrad. Elle ne serait que de 2,2 mrad avec le miroir courbe équivalent présentant le même diamètre d'ouverture.

- On évite les problèmes liés au coefficient de réflexion et aux tolérances mécaniques puisque la valeur exacte de la surface équivalente laser est obtenue par un réglage opto-mécanique qui peut tenir compte des performances réelles des composants. Ainsi, le système peut être facilement utilisé dans un large domaine spectral si le traitement du miroir couvre ledit domaine spectral, même si ce traitement est imparfait, et même si l'objectif présente de l'aberration chromatique.

- Il n'est pas nécessaire d'avoir un miroir plan, mais la réalisation d'un tel miroir avec des tolérances demandées est très facile. On demande en effet le même écart à la surface sur le miroir que sur le miroir sphérique équivalent mais sur une surface beaucoup plus petite (celle du faisceau au niveau du miroir). Cela correspond donc à une tolérance sur la courbure moins serrée, et le contrôle sur un plan est plus simple.

- L'objectif doit être de bonne qualité sur l'axe mais sa focale n'a pas besoin d'être définie et réalisée avec précision. Il suffit qu'elle soit mesurée avec précision pour calculer l'amplitude à donner aux mouvements du miroir.

Il est ainsi possible d'obtenir des valeurs précises et fixées a priori ou continûment variable de la surface équivalente laser dans un large domaine de longueurs d'ondes avec un seul montage réglable. Pour cela la commande du déplacement du miroir réglable peut être graduée en distance au plan focal et l'instrument fourni avec des abaques donnant la surface équivalente laser en fonction de cette distance et de la longueur d'onde. La commande de déplacement peut aussi être graduée directement en valeur de surface équivalente laser au détriment du domaine de longueurs d'ondes couvert. Le déplacement peut aussi être bloqué pour obtenir une valeur de surface équivalente laser prédéterminée de façon à former un étalon de surface équivalente laser. L'utilisation, de façon connue, d'un capteur de position, d'un microcontrôleur, de moyens de commande et éventuellement d'un afficheur, permettrait d'automatiser le réglage de la position du miroir par rapport à l'image foyer.

Les calculs mentionnés précédemment sont réalisés dans l'approximation géométrique paraxiale. Ils permettent de définir les paramètres instrumentaux et peuvent être vérifiés et éventuellement corrigés lors de la conception d'un instrument avec des cheminements réels des faisceaux pour tenir compte du filtre en cloche effectivement réalisé et éventuellement des aberrations de l'objectif. Ce dernier peut être dioptrique ou à miroirs.

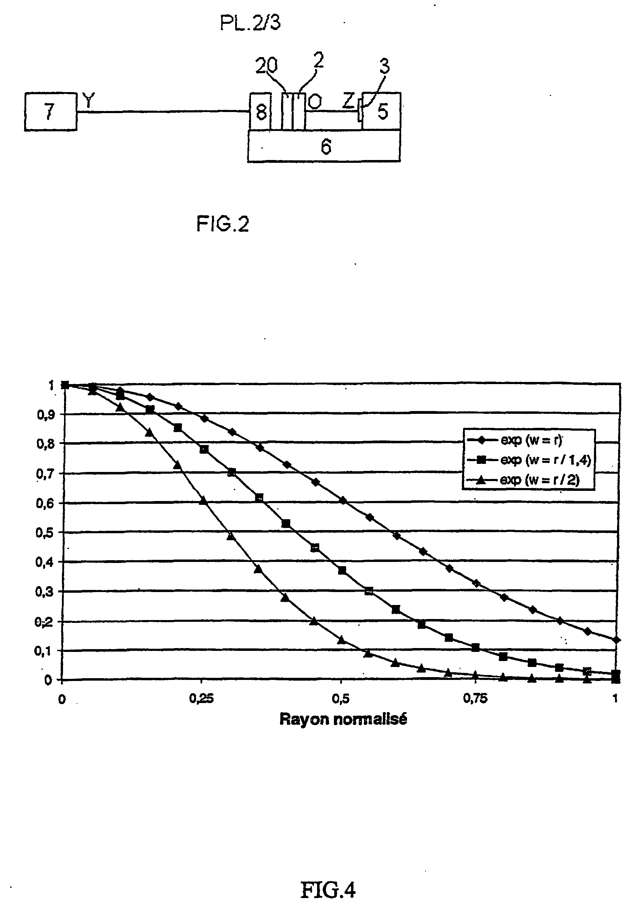

Dans une seconde variante de réalisation de l'invention présentée sur la figure 2, le dispositif précédemment décrit est associé à des moyens 5 aptes à régler la position du miroir le long dudit axe optique OZ ainsi qu'à des moyens 6 d'alignement du dispositif selon l'invention avec un dispositif extérieur 7. Un filtre atténuateur 8 est disposé devant l'ensemble formé par l'objectif 2 et le filtre atténuateur 20, du côté du dispositif extérieur 7.

Ce dispositif extérieur 7 comporte des moyens aptes à émettre un rayonnement laser dans une direction YO ainsi que des moyens de photodétection aptes à détecter tout rayonnement rétroréfléchi dans ladite direction YO.

Les moyens constitutifs de cette variante de réalisation de l'invention, ainsi que leur agencement, sont montrés en détail sur les figures 3a et 3b, figures sur lesquelles le miroir est disposé respectivement à proximité de l'image foyer, et éloigné de l'image foyer.

Le dispositif selon l'invention comporte un objectif doublet de 200 mm de focale 2, un miroir plan 3 monté sur des moyens 5 aptes à régler la position du miroir 3 le long dudit axe optique OZ ainsi que des moyens 6 d'alignement de l'axe optique OZ avec le dispositif extérieur 7.

Les moyens 5 aptes à régler la position du miroir 3 le long dudit axe optique OZ comprennent une platine 9 permettant, par rotation d'un bouton moleté et gradué 10, de positionner le miroir 3 avec précision entre le foyer de l'objectif et l'objectif lui-même. Ces moyens 5 comportent, en outre, un soufflet de protection 19 représenté en coupe axiale et reliant l'objectif 2 au miroir 3.

Les moyens 6 d'alignement de l'axe optique OZ avec le dispositif extérieur 7 comportent une structure support 12 et des moyens de visée 11.

La structure support 12 comporte un rail 13 qui constitue l'armature de l'ensemble du dispositif. Des cavaliers 14 permettent de fixer, sur le rail 13, l'objectif doublet de 200 mm de focale 2, le filtre atténuateur 8, les moyens 5 aptes à régler la position du miroir 3 le long dudit axe optique OZ, et les moyens de visée 11.

En outre, un cavalier formant une platine d'adaptation du montage 15 possède un trou taraudé qui permet de fixer l'ensemble sur un pied pour appareil photographique.

Un volet obturateur 16 est disposé devant les moyens de visée 11. Il peut prendre deux positions : la première dans laquelle il est en dehors de l'axe de visée W et la seconde dans laquelle il occulte l'axe de visée, supprimant alors toute surface équivalente laser additionnelle que pourraient engendrer les moyens de visée 11.

Le système de visée 11 pourrait, par un moyen optique, être rendu colinéaire avec l'axe de l'instrument. Cependant dans cette variante de réalisation de l'invention il est disposé latéralement. Cela apporte une parallaxe qui peut être compensée de façon connue ou négligée, car elle reste faible, les distances mises en jeu étant importantes et la tolérance sur l'alignement, comme dans le cas de l'exemple numérique donné précédemment, n'étant pas critique.

Tous les moyens de visée sont utilisables. Lorsqu'il s'agit d'une lunette, celle-ci, possédant sa propre surface équivalente laser mal maîtrisée, doit pouvoir être occultée lors de l'utilisation de l'instrument pour ne pas ajouter sa surface équivalente laser à celle de l'instrument. S'il s'agit, comme sur un fusil, d'un guidon et d'un oeilleton; il présente alors une surface équivalente laser négligeable.

Le système de visée est réglé (son axe est rendu parallèle à celui de l'instrument) en usine par les méthodes classiques dans le domaine optique.

Le filtre atténuateur 8 permet de faire varier ou d'ajuster la surface équivalente laser du dispositif selon l'invention.

Ce filtre est, de préférence, absorbant plutôt que réfléchissant pour limiter les risques d'interférences incontrôlées dans l'instrument ainsi réalisé. Ce filtre, même muni de traitements antireflets, présente un résidu de réflexion et devra être incliné de façon d'une part à ne pas risquer de participer à la rétroréflexion vers le dispositif monostatique d'émission réception et d'autre part à ne pas risquer de renvoyer vers ce dispositif la réflexion d'une source extérieure, par exemple le soleil ou la rétroréflexion d'un autre instrument. Une légère inclinaison vers le sol est souvent suffisante, mais il est aussi possible de l'orienter de façon que la réflexion du laser tombe dans un piège à lumière qui sert alors d'écran interdisant toute réflexion de sources parasites.

Dans ces conditions si le filtre possède un facteur de transmission « $T_f$ » à la longueur d'onde du laser, la surface équivalente laser de l'instrument est multipliée par le carré de ce facteur ($T_f^2$).

La transmission de ce filtre peut être fixe ou variable de façon continue pour réaliser un instrument ajustable continûment en surface équivalente laser et variable de façon discrète pour un ajustement discret de la surface équivalente laser ou pour élargir la gamme d'utilisation d'un dispositif à surface équivalente laser variable.

L'utilisation d'un tel filtre, dont l'atténuation varie en fonction de la longueur d'onde de façon indépendante de la variation de la surface équivalente laser de l'instrument sur lequel il est monté complique l'exploitation du système si le domaine de longueur d'onde à couvrir est étendu.

L'utilisation d'un dispositif selon l'invention est particulièrement simple pour l'utilisateur. Le fabricant règle l'orientation relative des axes (harmonisation), bloque les réglages et fournit les abaques qui donnent, en fonction de la longueur d'onde et de la position de la platine, la valeur de la surface équivalente laser de l'instrument.

L'utilisateur n'a qu'à fixer l'ensemble sur un pied photo au niveau de la platine d'adaptation 15, régler l'orientation au moyen du pied photo en utilisant la lunette de visée 11, le volet obturateur 16 étant ouvert, puis fermer le volet d'occultation 16 et régler la position de la platine 9, par simple rotation du bouton moleté 10 de commande, à la valeur lue sur les abaques.

L'augmentation du domaine d'application et de la confiance que l'on peut apporter aux dispositifs à calotte sphérique réfléchissante, à trièdre trirectangle réfléchissant ou selon la demande de brevet WO02133438, voire la possibilité de passer continûment d'un système utilisant des propriétés géométriques à un système limité par la diffraction, est réalisée en plaçant à proximité du plan de la pupille de l'instrument, à savoir le plan contenant le diaphragme matériel, et idéalement dans le plan lui-même, un atténuateur 20 présentant une courbe de transmission radiale (préférentiellement à répartition de révolution autour de l'axe optique du système) en forme de cloche. Cet atténuateur modifie la répartition de l'énergie lumineuse dans le plan de la pupille qui suit alors la loi de transmission de l'atténuateur, ce qui a pour effet de modifier la propagation du faisceau qui en est issu.

Une première solution consiste donc à équiper le dispositif système d'un filtre 20 dont ia transmission radiale suit une courbe représentant une distribution gaussienne, ladite distribution ayant un rayon faible devant le rayon du diaphragme de façon que la troncature apportée par ce dernier n'élimine qu'une partie très faible de l'énergie théoriquement disponible sous la gaussienne et ne perturbe que de façon négligeable la propagation « idéale » de la gaussienne. Les lois de propagation des faisceaux à répartition gaussienne permettent alors de calculer facilement la valeur de la SEL de l'instrument.

La figure 4 montre trois répartitions gaussiennes de rayons (w = r), (w = r /-1,4) et (w = r / 2), w étant le rayon de la gaussienne pour lequel celle-ci vaut $1 / e^2$ de son maximum et r étant le rayon de la troncature par le diaphragme dont la valeur a été normalisée (r = 1 ) sur la figure. La troncature à (r = w) élimine 13.6 % de l'énergie totale de la gaussienne ; cette énergie manquante perturbe la propagation et peut créer des modulations indésirables. Une troncature à (r = 1,4 w) élimine encore 2 % de l'énergie totale tandis que la troncature à (r = 2 w) n'élimine plus que 0,034 % de l'énergie totale, ce qui est négligeable. Ainsi, plus le rayon (w) de la gaussienne est petit et plus on se rapproche d'une propagation idéale, mais en même temps on réduit l'énergie entrant dans l'instrument et l'erreur d'orientation du système acceptable pour ne pas perturber la valeur de sa SEL.

D'autres répartitions que la répartition gaussienne peuvent donner des résultats satisfaisants sous réserve de respecter quelques règles qui ressortent d'une approche pragmatique reposant sur des calculs faits avec différentes répartitions dans la pupille de l'instrument considéré.

On choisit a priori des répartitions radiales et de révolution, dont la fonction représentative est décroissante de façon monotone depuis le centre de la pupille jusqu'à son bord. La transmission est prise égale à l'unité au centre de la pupille sans que cela soit une nécessité ; une valeur différente, Tc, peut être représentée par l'ajout d'un atténuateur à répartition uniforme qui modifierait l'énergie transmise dans le système puis rétroréfléchie multipliant ainsi la SEL du système par $Tc^2$, mais n'aurait strictement aucune action sur le problème de modulation traité ici.

Cette répartition doit, préférablement, avoir les propriétés suivantes :

- elle est définie à l'intérieur du diaphragme matériel définissant la pupille du système, elle présente une décroissance de préférence monotone du centre jusqu'au bord de la pupille,
- elle a préférentiellement une tangente horizontale au centre,
- sa valeur est très faible, de préférence nulle, en bord de pupille,
- elle ne présente de préférence ni discontinuité ni point anguleux dans son domaine de définition, ou, en d'autres termes, la pente de la surface représentant la loi de transmission ne comporte pas de discontinuité.
- elle atteint de préférence la valeur nulle en bord de pupille avec un raccordement à tangente horizontale.

On peut obtenir de telles répartitions avec les fonctions du facteur de transmission suivantes données à titre d'exemple : $T = \sin^2 A / A^2$ où $A = \pi r / r_0$ et $T = \cos^2 B$ où $B = \pi r / 2 r_0$.

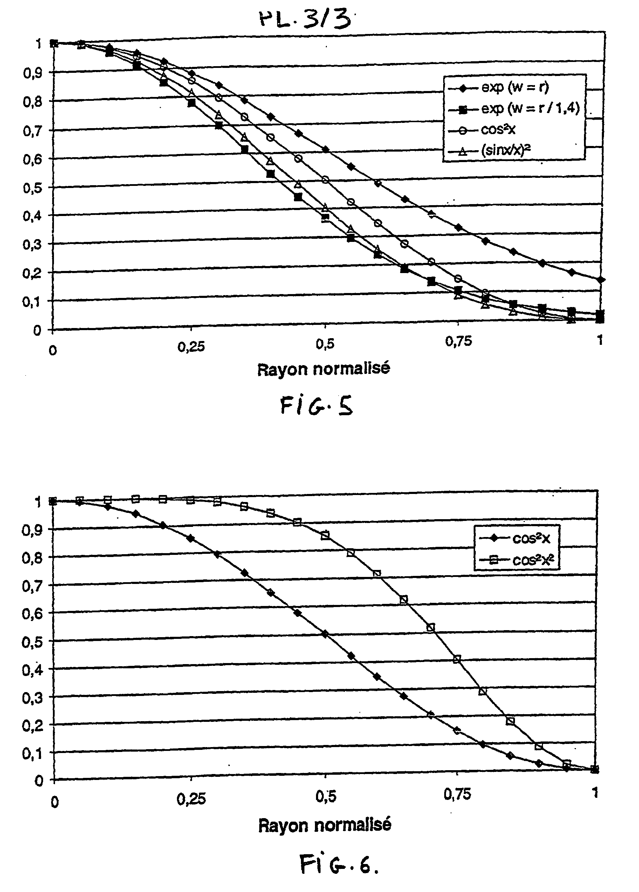

La figure 5 montre de telles courbes comparées aux deux gaussiennes de plus grand rayon. On constate qu'elles sont très proches de ces gaussiennes mais ne présentent pas de troncature génératrice des hautes fréquences perturbatrices.

Une fonction de transmission en $T = \cos^2 B^2$, comme montrée sur la figure 6, comparée avec la fonction $T = \cos^2 B$ (où $B = \pi r / 2 r_0$) montre un gain de transmission important et une courbe très plate au centre de la pupille pour la première de ces deux fonctions. En revanche, cette répartition est assez éloignée d'une répartition gaussienne.

Les filtres étant traversés deux fois, on pourrait penser que leur loi de transmission n'a pas besoin d'être élevée au carré, cette élévation étant obtenue par la double traversée. Cela n'est pas toujours exact dans la mesure où les faisceaux ne traversent pas nécessairement la pupille au même endroit.

Tout comme pour le filtre 8, mais en plus avec la contrainte supplémentaire que la réalisation des filtres en cloche fait généralement intervenir des couches réfléchissantes, le filtre en cloche 20 est légèrement incliné sur l'axe optique OZ mais, de préférence, de telle sorte qu'il ne soit pas parallèle au filtre 8 afin d'éviter les interférences entre les deux filtres.

Pour des systèmes constitués d'une simple calotte sphérique, il est envisageable que ladite calotte possède directement un traitement réfléchissant créant un faisceau réfléchi possédant une telle répartition énergétique. Les fonctions précédentes ne seraient plus alors des fonctions de transmission d'un filtre mais directement la fonction de réflexion du miroir. On peut également munir une calotte possédant un traitement uniforme d'un filtre atténuateur. Dans ce cas, si le filtre est assez proche de la calotte, il pourrait avoir une fonction de transmission du premier degré en (sin A / A) ou en (cos B), l'élévation au carré étant obtenue par le double passage en deux points pratiquement confondus.

Pour les répartitions non gaussiennes, le calcul de SEL exige en principe un calcul théorique que des logiciels de calcul optique existant dans le commerce permettent.

En fait pour un instrument fortement défocalisé, comme décrit dans cette la demande de brevet WO02/33438 ou pour une calotte sphérique le calcul géométrique exposé dans cette demande est applicable quelle que soit la répartition.

Bien entendu, de nombreuses modifications peuvent être apportées à l'exemple de réalisation précédemment décrit sans sortir du cadre de l'invention.

## Revendications

1. Dispositif à surface équivalente laser parfaitement connue comportant une pupille et apte à mesurer les performances d'un dispositif de détection active, **caractérisé en ce qu'**il comporte un atténuateur radial (20) apte à modifier l'ouverture du dispositif et possédant une loi de transmission radiale en courbe en cloche.

2. Dispositif selon la revendication 1, **caractérisé en ce que** l'atténuateur radial (20) est disposé dans le plan de la pupille

3. Dispositif selon l'une quelconque des revendications 1 et 2, **caractérisé en ce que** la loi de transmission comporte une symétrie de révolution.

4. Dispositif selon l'une quelconque des revendications 1 à 3, **caractérisé en ce que** la ici de transmission est décroissante de façon monotone depuis le centre de la pupille jusqu'à son bord.

5. Dispositif selon l'une quelconque des revendications 1 à 4, **caractérisé en ce que** la loi de transmission est de type sinusoïdale.

6. Dispositif selon l'une quelconque des revendications 1 à 5, **caractérisé en ce que**, sur l'ensemble de la pupille, la pente de la surface représentant la loi de transmission ne comporte pas de discontinuité.

7. Dispositif selon l'une quelconque des revendications 1 à 5, **caractérisé en ce qu'**il comporte un objectif (2) et un miroir (3) disposé de façon à former au moins un axe optique OZ du dispositif et à une distance x de l'image foyer F', x étant différente de 0.

8. Dispositif selon l'une quelconque des revendications 1 à 5, **caractérisé en ce qu'**il comporte un objectif (2), un miroir (3) disposé de façon à former au moins un axe optique (OZ) du dispositif et des moyens de réglage (5) de la distance séparant l'objectif (2) du miroir (3).

9. Dispositif selon la revendication 8, **caractérisé en ce qu'**il comporte un objectif fixe (2), un miroir (3) et des moyens (5) de réglage de la position du miroir (3) qui sont aptes à régler la distance séparant l'objectif du miroir.

10. Dispositif selon la revendication 8, **caractérisé en ce qu'**il comporte un miroir (3) fixe et des moyens de réglage de la position de l'objectif (2) qui sont aptes à régler la distance séparant l'objectif du miroir.

11. Dispositif selon l'une quelconque des revendications 8 et 9, **caractérisé en ce que** lesdits moyens (5) de réglage comportent un moteur électrique du type pas à pas.

12. Dispositif selon l'une quelconque des revendications 9 à 11, **caractérisé en ce que** les moyens (5) aptes à régler la position du miroir le long dudit axe optique comportent un mouvement hélicoïdal.

13. Dispositif selon l'une quelconque des revendications 9 à 12, **caractérisé en ce qu'**il comporte des moyens de commande (10) des moyens (5) aptes à régler la position du miroir le long dudit axe optique.

14. Dispositif selon la revendication 13, **caractérisé en ce que** les moyens de commande (10) comportent une valeur de consigne exprimée en Surface équivalente laser.

15. Dispositif selon l'une quelconque des revendications 7 à 14, **caractérisé en ce que** ledit miroir est un miroir plan.

16. Dispositif selon l'une quelconque des revendications 7 à 15, **caractérisé en ce que** ledit miroir est perpendiculaire audit axe optique de l'objectif.

**17.** Dispositif selon la revendication 1, **caractérisé en ce qu'**il consiste en une calotte sphérique réfléchissante.

**18.** Dispositif selon la revendication 17, **caractérisé en ce que** la calotte sphérique comporte un traitement réfléchissant radial dont le coefficient de réflexion suit une courbe en cloche.

**19.** Dispositif selon la revendication 1, **caractérisé en ce qu'**il consiste en un trièdre trirectangle réfléchissant.

**20.** Dispositif selon la revendication 1, **caractérisé en ce qu'**il comporte un objectif et une surface diffusante placée en son foyer ou à faible distance de celui-ci.

**21.** Dispositif selon la revendication 1, **caractérisé en ce qu'**il comporte un objectif et une surface réfléchissante placée en son foyer ou à faible distance de celui-ci.

**Patentansprüche**

**1.** Vorrichtung mit vollkommen bekannter äquivalenter Laser-Oberfläche, die eine Pupille umfasst und die Leistungsfähigkeit einer aktiven Erfassungsvorrichtung messen kann, **dadurch gekennzeichnet, dass** sie eine radiale Dämpfungseinrichtung (20) umfasst, die die Öffnung der Vorrichtung modifizieren kann und ein glockenkurvenförmiges radiales Durchlassgesetz besitzt.

**2.** Vorrichtung nach Anspruch 1, **dadurch gekennzeichnet, dass** die radiale Dämpfungseinrichtung (20) in der Ebene der Pupille angeordnet ist.

**3.** Vorrichtung nach einem der Ansprüche 1 und 2, **dadurch gekennzeichnet, dass** das Durchlassgesetz eine Rotationssymmetrie aufweist.

**4.** Vorrichtung nach einem der Ansprüche 1 bis 3, **dadurch gekennzeichnet, dass** das Durchlassgesetz von der Mitte der Pupille bis zu ihrem Rand monoton abnimmt

**5.** Vorrichtung nach einem der Ansprüche 1 bis 4, **dadurch gekennzeichnet, dass** das Durchlassgesetz vom Sinustyp ist.

**6.** Vorrichtung nach einem der Ansprüche 1 bis 5, **dadurch gekennzeichnet, dass** die das Durchlassgesetz repräsentierende Steigung der Oberfläche auf der gesamten Pupille keine Diskontinuität aufweist.

**7.** Vorrichtung nach einem der Ansprüche 1 bis 5, **dadurch gekennzeichnet, dass** sie ein Objektiv (2) und einen Spiegel (3) umfasst, der so angeordnet ist, dass er wenigstens eine optische Achse OZ der Vorrichtung bildet, und in einem Abstand x von der Brennebene F' angeordnet ist, wobei x von 0 verschieden ist.

**8.** Vorrichtung nach einem der Ansprüche 1 bis 5, **dadurch gekennzeichnet, dass** sie ein Objektiv (2), einen Spiegel (3), der so angeordnet ist, dass er wenigstens eine optische Achse OZ der Vorrichtung bildet, und Mittel (5) zum Einstellen des Abstandes, der das Objektiv (2) vom Spiegel (3) trennt, umfasst.

**9.** Vorrichtung nach Anspruch 8, **dadurch gekennzeichnet, dass** sie ein festes Objektiv (2), einen Spiegel (3) und Mittel (5) zum Einstellen der Position des Spiegels (3), die den Abstand, der das Objektiv vom Spiegel trennt, einstellen können, umfasst.

**10.** Vorrichtung nach Anspruch 8, **dadurch gekennzeichnet, dass** sie einen festen Spiegel (3) und Mittel zum Einstellen der Position des Objektivs (2), die den Abstand, der das Objektiv vom Spiegel trennt, einstellen können, umfasst.

**11.** Vorrichtung nach einem der Ansprüche 8 und 9, **dadurch gekennzeichnet, dass** die Einstellmittel (5) einen Elektromotor des Schrittmotortyps umfassen.

**12.** Vorrichtung nach einem der Ansprüche 9 bis 11, **dadurch gekennzeichnet, dass** die Mittel (5), die die Position des Spiegels längs der optischen Achse einstellen können, eine schraubenlinienförmige Bewegung umfassen.

**13.** Vorrichtung nach einem der Ansprüche 9 bis 12, **dadurch gekennzeichnet, dass** sie Mittel (10) zum Steuern der Mittel (5), die die Position des Spiegels längs der optischen Achse einstellen können, umfasst.

**14.** Vorrichtung nach Anspruch 13, **dadurch gekennzeichnet, dass** die Steuermittel (10) einen Sollwert enthalten, der durch die äquivalente Laseroberfläche ausgedrückt ist.

**15.** Vorrichtung nach einem der Ansprüche 7 bis 14, **dadurch gekennzeichnet, dass** der Spiegel ein ebener Spiegel ist.

**16.** Vorrichtung nach einem der Ansprüche 7 bis 15, **dadurch gekennzeichnet, dass** der Spiegel zur optischen Achse des Objektivs senkrecht ist.

**17.** Vorrichtung nach Anspruch 1, **dadurch gekennzeichnet, dass** sie aus einer reflektierenden sphärischen Kuppel besteht.

**18.** Vorrichtung nach Anspruch 17, **dadurch gekennzeichnet, dass** die sphärische Kuppel radial reflektierend behandelt ist, wobei der Reflexionskoeffizient einer Glockenkurve folgt.

**19.** Vorrichtung nach Anspruch 1, **dadurch gekennzeichnet, dass** sie aus einem reflektierenden Dreiflächner mit drei Rechtecken besteht.

**20.** Vorrichtung nach Anspruch 1, **dadurch gekennzeichnet, dass** sie ein Objektiv und eine in dessen Fokus oder in einem geringen Abstand hiervon angeordnete streuende Oberfläche umfasst.

**21.** Vorrichtung nach Anspruch 1, **dadurch gekennzeichnet, dass** sie ein Objektiv und eine reflektierende Oberfläche, die in seinem Fokus oder in einem geringen Abstand hiervon angeordnet ist, umfasst.

**Claims**

**1.** Device having a perfectly known laser cross section and having a pupil, which can measure the performance of an active detection device, **characterized in that** it has a radial attenuator (20) which can modify the aperture of the device and which has a radial transmission curve in the form of a bell-curve.

**2.** Device according to Claim 1, **characterized in that** the radial attenuator (20) is positioned in the plane of the pupil.

**3.** Device according to either of Claims 1 and 2, **characterized in that** the transmission curve has symmetry of revolution.

**4.** Device according to any one of Claims 1 to 3, **characterized in that** the transmission curve shows a monotonic decrease from the centre to the edge of the pupil.

**5.** Device according to any one of Claims 1 to 4, **characterized in that** the transmission curve is of the sinusoidal type.

**6.** Device according to any one of Claims 1 to 5, **characterized in that**, over the whole pupil, the slope of the surface representing the transmission curve has no discontinuity.

**7.** Device according to any one of Claims 1 to 5, **characterized in that** it has an objective (2) and a mirror (3) positioned to form at least one optical axis OZ of the device and at a distance x from the focal image F', x being different from 0.

**8.** Device according to any one of Claims 1 to 5, **characterized in that** it has an objective (2) and a mirror (3) positioned to form at least one optical axis (OZ) of the device and means (5) for adjusting the distance between the objective (2) and the mirror (3).

**9.** Device according to Claim 8, **characterized in that** it has a fixed objective (2), a mirror (3) and means (5) for adjusting the position of the mirror (3), which can adjust the distance between the objective and the mirror.

**10.** Device according to Claim 8, **characterized in that** it has a fixed mirror (3) and means for adjusting the position of the objective (2) which can adjust the distance between the objective and the mirror.

**11.** Device according to either of Claims 8 and 9, **characterized in that** the said adjusting means (5) comprise an electric motor of the stepping type.

**12.** Device according to any one of Claims 9 to 11, **characterized in that** the means (5) for adjusting the position of the mirror along the said optical axis comprise a helical movement.

**13.** Device according to any one of Claims 9 to 12, **characterized in that** it comprises means (10) for controlling the means (5) for adjusting the position of the mirror along the said optical axis.

**14.** Device according to Claim 13, **characterized in that** the control means (10) have a set point expressed in terms of the laser cross section.

**15.** Device according to any one of Claims 7 to 14, **characterized in that** the said mirror is a flat mirror.

**16.** Device according to any one of Claims 7 to 15, **characterized in that** the said mirror is perpendicular to the said optical axis of the objective.

**17.** Device according to Claim 1, **characterized in that** it consists of a reflecting spherical dome.

**18.** Device according to Claim 17, **characterized in that** the spherical dome has a radial reflective treatment whose reflection coefficient follows the form of a bell-curve.

**19.** Device according to Claim 1, **characterized in that** it consists of a reflecting trirectangular trihedron.

**20.** Device according to Claim 1, **characterized in that** it has an objective and a diffusing surface positioned at its focal point or at a small distance therefrom.

21. Device according to Claim 1, **characterized in that** it has an objective and a reflecting surface positioned at its focal point or at a small distance therefrom.

FIGURE 1

fig.3a

FIG.3b

PL.2/3

FIG.2

**Rayon normalisé**

Legend:
- exp (w = r)
- exp (w = r/1,4)
- exp (w = r/2)

FIG.4

13

PL. 3/3

FIG. 5

FIG. 6.